# FASCICULE DE BREVET EUROPEEN

(11) **EP 3 527 867 B1**
(45) Date de publication et mention de la délivrance du brevet: **05.08.2020**
(21) Numéro de dépôt: 19165694.1
(22) Date de dépôt: 28.03.2019
(51) Int. Cl.: F16L 37/088, F16L 37/14

(54) **DISPOSITIF DE RACCORDEMENT FLUIDIQUE**
FLÜSSIGKEITSANSCHLUSSVORRICHTUNG
FLUID CONNECTION DEVICE

(30) Priorité: 02.02.2018 FR 1850911
(43) Date de publication de la demande: 21.08.2019
(73) Titulaire: HUTCHINSON, 75008 Paris (FR)
(72) Inventeur: GAURAT, Flavien, 45490 MIGNERES (FR); MILANDRE, Robin, 45210 FERRIERES EN GATINAIS (FR); AMARU, Cyril, 45290 VARENNES CHANGY (FR); MONGENDRE, Julien, 45380 LA CHAPELLE SAINT MESMIN (FR)
(74) Mandataire: Gevers & Orès

(56) Documents cités:
- EP-A1- 2 602 531
- EP-A1- 3 179 148
- WO-A1-2011/108728

## Description

### DOMAINE TECHNIQUE

La présente invention concerne un dispositif de raccordement fluidique par exemple pour un véhicule automobile, notamment pour des circuits de fluide installés dans le compartiment moteur (par exemple des circuits d'air ou d'eau) ou sous la caisse d'un véhicule (par exemple un circuit de carburant ou un circuit « SCR » de réduction catalytique sélective). En variante, il pourrait être utilisé dans un autre domaine par exemple aéronautique, marine, etc.

### ETAT DE L'ART

Un dispositif de raccordement fluidique, du type connectique rapide, a pour but de connecter deux interfaces ou raccords entre eux d'une manière étanche, rapide, précise et fiable. Cette opération doit être réalisée en quelques secondes, et un opérateur doit pouvoir vérifier qu'une bonne connexion s'est établie entre les raccords pour éviter ensuite toute fuite de fluide au niveau du dispositif. Par ailleurs, un dispositif de ce type doit de préférence être démontable et remontable en fonction des besoins, par exemple lors d'une opération de maintenance.

Un dispositif de ce type est décrit dans le document FR-B1-2 795 156 au nom de la Demanderesse. Ce dispositif comprend notamment deux raccords tubulaires, respectivement mâle et femelle, destinés à être emboîtés l'un dans l'autre. Le dispositif est complété par un cavalier ou une épingle élastique destiné à chevaucher le raccord femelle et qui présente deux portions latérales élastiquement déformables s'engageant dans deux ouvertures du raccord femelle afin de coopérer par encliquetage élastique avec le raccord mâle. Pour faciliter la connexion, l'épingle est pré-montée sur le raccord femelle, et on y engage ensuite l'embout mâle. Cet engagement entraîne un écartement des portions de l'épingle, ces portions reprenant leur position initiale lorsque les embouts sont dans une position d'emboîtement prédéterminée. En pratique, dans cette position initiale, l'épingle peut être à l'état contraint pour être maintenue serrée sur le raccord femelle. L'opérateur qui effectue le montage peut être assuré d'une connexion convenable lorsque les deux portions élastiques reviennent dans leurs positions initiales, car cela se traduit par l'émission d'un bruit caractéristique d'encliquetage que l'opérateur peut percevoir.

Cependant, ce témoin sonore n'est pas forcément perçu par l'opérateur en présence d'un bruit de fond. Pour ces raisons, il est connu d'équiper le dispositif d'un moyen supplémentaire, par exemple visuel, qui permet de vérifier qu'une bonne liaison a été établie en plus du bruit caractéristique émis lors de la connexion.

Le document EP-B1-2 251 581 au nom de la Demanderesse décrit un tel témoin visuel, associé dans le raccord femelle à l'épingle. Un inconvénient des témoins visuels de verrouillage utilisés à ce jour est, que rien ne permet de certifier que l'opérateur intervenant sur la chaîne de montage des véhicules automobiles a bien effectué ce double contrôle, et que ce contrôle visuel n'est de toute manière pas efficace si le raccord rapide est à verrouiller en un emplacement non aisément visible par l'opérateur (montage « en aveugle »). Par conséquent, ces témoins visuels n'apparaissent pas totalement fiables.

Le document WO 2011/108728 A1 décrit un autre dispositif de raccordement fluidique comprenant un raccord mâle, un raccord femelle, une épingle et une bague.

La présente invention propose un perfectionnement à cette technologie, qui garantit une position précise des raccords l'un dans l'autre et donc une bonne connexion entre ces raccords.

### EXPOSE DE L'INVENTION

L'invention propose à cet effet un dispositif de raccordement fluidique, en particulier pour un véhicule automobile, comportant :
- un raccord mâle et un raccord femelle, qui sont configurés pour être emboîtés l'un dans l'autre le long d'un axe X,
- une épingle élastiquement déformable de forme générale en U ou C et montée sur le raccord femelle, ladite épingle comportant au moins une partie traversant le raccord femelle et configurée pour coopérer par encliquetage élastique avec ledit raccord mâle, et
- une bague mobile en translation axiale sur le raccord femelle entre une position de libération de l'épingle et une position de verrouillage de cette épingle ainsi que des raccords,
**caractérisé en ce que** le raccord femelle porte des éléments mobiles en translation radiale entre une première position radiale, de préférence interne, d'immobilisation de la bague sur le raccord femelle, et une seconde position radiale, de préférence externe, de libération de la bague, lesdits éléments étant configurés pour coopérer à la fois avec le raccord mâle et ladite bague de sorte à libérer la bague lorsque l'épingle est encliquetée sur le raccord mâle.

Le dispositif selon l'invention comprend deux moyens de verrouillage de la connexion des raccords, avec d'une part l'épingle élastique et d'autre part la bague. La bague est apte à être déplacée par un opérateur, de sa position de libération à sa position de verrouillage, uniquement lorsque les éléments sont dans une position radiale prédéterminée. Cette position radiale des éléments est obtenue lorsque le raccord mâle est correctement emboîté dans le raccord femelle, c'est-à-dire lorsque l'épingle est dans sa position encliquetée. Autrement dit, l'opérateur ne pourra déplacer la bague de verrouillage de l'épingle que dans le cas où l'épingle sera dans sa position encliquetée. Pour éviter qu'un opérateur déplace la bague sur le raccord femelle, avant l'emboîtement complet des raccords, la bague est de préférence configurée pour coopérer elle-même avec le raccord femelle pour éviter un tel déplacement, tant que les éléments ne sont pas dans la seconde position radiale précitée. Par ailleurs, l'épingle est avantageusement conçue de façon à ce que, lorsqu'elle n'est pas dans la position encliquetée ni dans sa position initiale sur le raccord femelle, elle empêche une translation de la bague depuis sa position de libération jusqu'à sa position de verrouillage.

Les éléments sont avantageusement indépendants du raccord femelle dans la mesure où ils ne sont pas liés de matière ou formés d'une seule pièce avec le raccord femelle. Ceci est particulièrement avantageux pour deux raisons : la première est lié au fait qu'ils peuvent être réalisés dans un matériau différent de celui du raccord femelle, ce matériau pouvant être sélectionné en fonction des besoins spécifiques pour la fonction des éléments ; la seconde raison est lié à la grande précision du positionnement des éléments lors de leur déplacement, ces déplacements n'entraînant de plus pas de déformation de matière, ce qui est positif en termes de durée de vie pour le dispositif.

Le dispositif selon l'invention peut comprendre une ou plusieurs des caractéristiques suivantes, prises isolément les unes des autres ou en combinaison les unes avec les autres :
- les éléments sont des pions qui ont par exemple une forme générale de clou ou d'haltère,
- les éléments sont rapportés sur le raccord femelle,
- les pions ont des axes d'allongement s'étendant radialement par rapport à l'axe X,
- les pions ont chacun une tête configurée pour coopérer avec la bague et une pointe configurée pour coopérer avec le raccord mâle, ou inversement,
- l'épingle est configurée de façon à limiter la course de déplacement de la bague sur le raccord femelle, lorsque l'épingle n'est pas dans une position d'encliquetage et lorsque lesdits éléments sont dans ladite seconde position,
- le raccord mâle comprend une portion cylindrique reliée à une extrémité de petit diamètre d'une rampe tronconique dont une extrémité de plus grand diamètre est reliée à une gorge annulaire, ladite épingle étant configurée pour coopérer par glissement avec ladite rampe et par encliquetage élastique avec ladite gorge, et lesdits éléments étant destinés à coopérer par glissement avec ladite rampe,
- la bague comprend des pattes de verrouillage élastiquement déformables, entre une position libre sans contrainte dans laquelle elles bloquent axialement la bague sur le raccord femelle, et une position contrainte par lesdits éléments dans laquelle elles autorisent un déplacement de la bague sur le raccord femelle,
- les pattes ont une forme allongée en direction axiale,
- les pattes de verrouillage comprennent à des extrémités libres des patins qui sont logés avec les têtes des pions dans des logements de forme complémentaire du raccord femelle, et qui sont déplaçables radialement dans ces logements,
- l'épingle et les éléments sont à une distance axiale qui est inférieure à la longueur de la bague, qui est elle-même inférieure à la longueur du raccord femelle,
- la bague est configurée pour être apte à recouvrir et cacher l'épingle et lesdits éléments, en particulier lorsqu'elle est dans ladite position de verrouillage,
- le raccord femelle comprend un repère visuel et la bague est configurée pour être apte à recouvrir et cacher ce repère visuel, en particulier lorsqu'elle est dans ladite position de libération ; ce repère visuel est par exemple une marque en couleur, une gravure, un symbole, un texte, etc.,
- l'épingle est formée par un élément élastique tel qu'un fil métallique ou plastique.

### DESCRIPTION DES FIGURES

L'invention sera mieux comprise et d'autres détails, caractéristiques et avantages de l'invention apparaîtront plus clairement à la lecture de la description suivante faite à titre d'exemple non limitatif et en référence aux dessins annexés dans lesquels :
- les figures 1 et 2 sont des vues schématiques en perspective d'un dispositif de raccordement fluidique selon l'invention, respectivement sans le raccord mâle à la figure 1 et avec ce raccord mâle à la figure 2, les figures 1 et 2 illustrant en outre respectivement des positions de libération et d'immobilisation d'une bague,
- la figure 3 est une vue schématique de face du dispositif de la figure 1, c'est-à-dire sans le raccord mâle, et illustre une position radiale, ici externe, d'éléments portés par le raccord femelle,
- la figure 4 est une vue schématique de face du dispositif de la figure 2, sans le raccord mâle, et illustre une position radiale, ici interne, d'éléments portés par le raccord femelle,
- la figure 5 est une vue schématique de côté et en coupe axiale partielle du dispositif de la figure 1, le raccord mâle étant représenté mais à distance du raccord femelle ; le dispositif est ainsi dans un état non connecté,
- la figure 6 est une vue schématique de côté, en perspective et en coupe axiale partielle, du dispositif de la figure 2 ; le dispositif est ainsi dans un état connecté,
- la figure 7 est une vue schématique en perspective éclatée du dispositif de la figure 1,
- la figure 8 est une vue schématique en perspective de la bague du dispositif des figures 1 et 2,
- la figure 9 est une vue à plus grande échelle d'une partie du raccord femelle du dispositif des figures 1 et 2 ;
- la figure 10 est une vue schématique en perspective d'un élément du type pion du dispositif des figures 1 et 2,
- les figures 11 à 15 sont des vues schématiques partielles en coupe axiale du dispositif des figures 1 et 2 et illustrent des étapes de connexion du raccord femelle sur le raccord mâle,
- la figure 16 est une vue schématique en perspective éclatée d'une variante de réalisation d'un dispositif de raccordement fluidique selon l'invention,
- la figure 17 est une vue schématique partielle en coupe axiale du dispositif de la figure 16, les raccords étant dans une position emboîtée,
- les figures 18 à 20 sont des vues schématiques partielles en coupe axiale de variantes de réalisation du dispositif selon l'invention, et
- les figures 21 et 22 sont des vues schématiques de côté d'une autre variante de réalisation du dispositif selon l'invention, respectivement en positions déconnecté et connecté.

### DESCRIPTION DETAILLEE

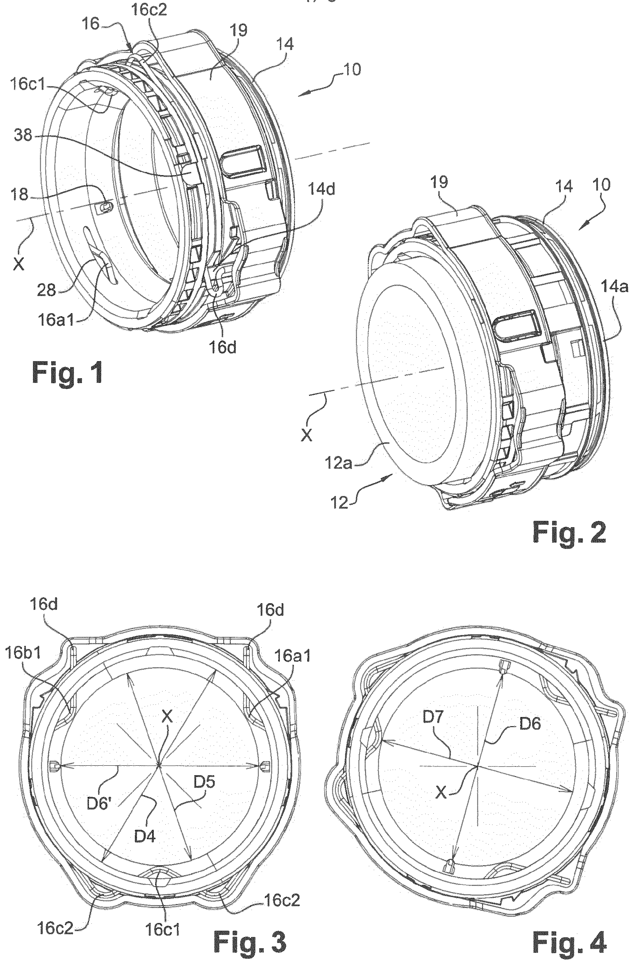

Les figures 1 à 15 illustrent un premier mode de réalisation d'un dispositif 10 de raccordement fluidique selon l'invention, par exemple pour un circuit de fluide d'un véhicule automobile.

Le dispositif 10 comprend essentiellement au moins cinq pièces à savoir un raccord mâle 12, un raccord femelle 14, une épingle élastique 16, au moins un élément qui est un pion 18 dans l'exemple représenté, et une bague 19.

Les raccords 12 et 14 sont destinés à être emboîtés l'un dans l'autre et à être solidaires chacun d'un tuyau ou composant à raccorder. L'épingle 16, et le ou les pions 18, sont portés par le raccord femelle 14 et sont aptes à coopérer avec le raccord mâle 12. La bague 19 est également portée par le raccord femelle 14.

Ces pièces vont être décrites les unes après les autres dans ce qui suit, puis leur coopération mutuelle et l'emboîtement des raccords seront décrits.

### -> Raccord mâle 12

Le raccord mâle 12 a une forme tubulaire d'axe X. Il est destiné à être engagé au moins en partie dans le raccord femelle 14 et comprend une extrémité axiale 12a de solidarisation à un tuyau ou un composant, comme évoqué dans ce qui précède.

Le raccord mâle 12 est destiné à coopérer avec le raccord femelle 14, et en particulier avec l'épingle 16 qu'il porte, par encliquetage élastique et comprend pour cela une rainure annulaire radialement externe 20 dans laquelle est destinée à être logée au moins en partie de l'épingle 16 lorsque les raccords sont correctement positionnés l'un à l'intérieur de l'autre.

Dans l'exemple représenté, le raccord mâle 12 comprend essentiellement deux portions cylindriques 12b, 12c de diamètres différents et reliées l'une à l'autre par une rampe tronconique 22 (externe) s'étendant tout autour de l'axe X. La portion 12c de plus petit diamètre définit l'extrémité libre du raccord 12 et est reliée à l'extrémité de plus petit diamètre de la rampe 22, dont l'extrémité de plus grand diamètre est reliée à une extrémité de la portion 12b de plus grand diamètre. L'extrémité opposée de cette portion 12b définit l'extrémité axiale 12a précitée.

La rainure 20 est située sur la portion 12b de plus grand diamètre, et est ici située au plus près de la rampe 22. Dans les dessins, le diamètre de la portion 12b, qui est le diamètre externe de la rainure 20, est noté D1, le diamètre de la portion 12c est noté D2, et le diamètre interne de la rainure 20 est noté D3. D1 est supérieur à D2, et D3 est supérieur à D2.

Le raccord mâle 12 est par exemple réalisé en polyamide ou aluminium.

### -> Raccord femelle 14

Le raccord femelle 14 a une forme tubulaire d'axe X. Il comprend également une extrémité axiale 14a de solidarisation à un tuyau ou un composant, comme évoqué dans ce qui précède.

Le raccord femelle 14 est conformé pour s'étendre autour du raccord mâle et comprend donc un alésage axial interne adapté à la forme et aux dimensions du raccord mâle 12.

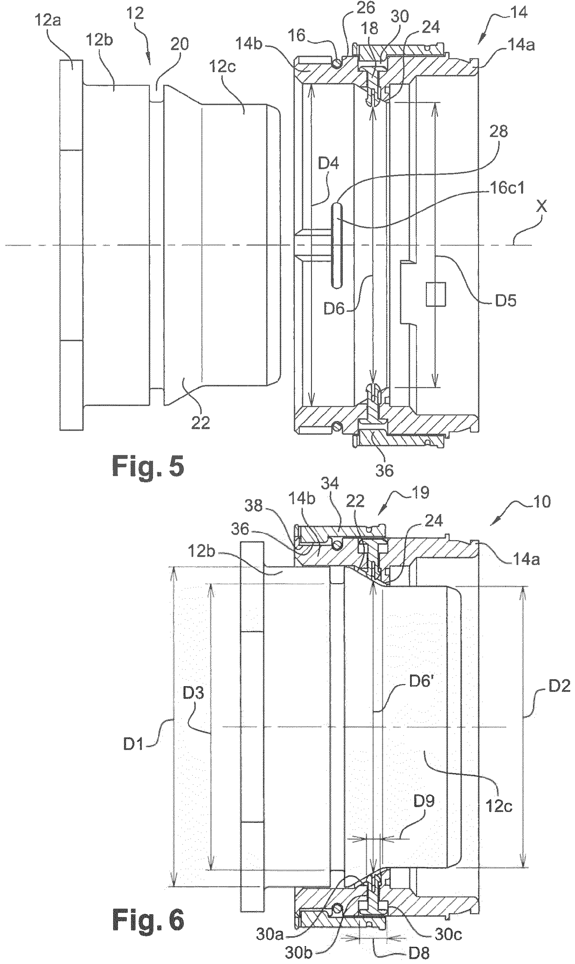

Dans l'exemple représenté, du côté opposé à l'extrémité 14a, le raccord femelle 14 comprend une portion cylindrique 14b qui est reliée à une extrémité de grand diamètre interne d'une rampe tronconique 24 (interne) s'étendant autour de l'axe X et dont l'extrémité de plus petit diamètre est située du côté de l'extrémité 14a. Comme on le voit notamment à la figure 6, la portion 14b est configurée pour s'étendre avec un faible jeu radial autour de la portion 12b, et la rampe 24 est configurée pour s'étendre également avec un faible jeu radial autour de la rampe 22.

En pratique, la portion 14b a un diamètre interne noté D4 qui est légèrement supérieur à D1 et les rampes 22, 24 peuvent avoir des angles de cône sensiblement identiques. La rampe 24 a un diamètre interne minimal noté D5, qui est légèrement supérieur au diamètre D2.

Le raccord femelle 14 porte la bague 19, l'épingle 16 ainsi que deux pions 18 dans l'exemple représenté.

Le raccord 14 est par exemple réalisé en polyamide.

### -> Epingle 16

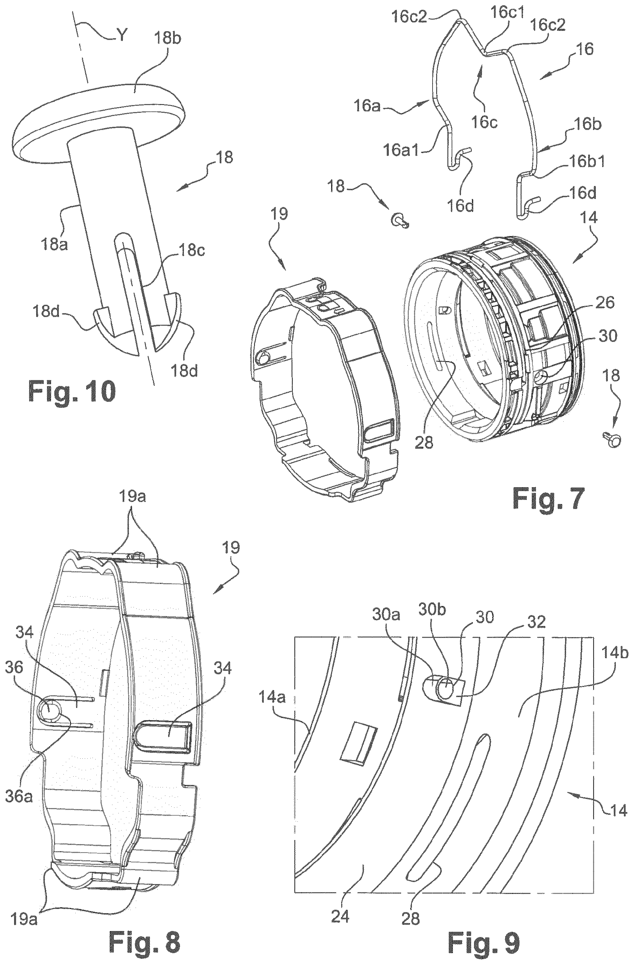

L'épingle 16 est mieux visible à la figure 7. Elle a une forme générale en U ou C et est formée par un élément élastique tel qu'un fil métallique. Elle comprend deux portions latérales 16a, 16b reliées entre elles par une portion médiane 16c.

L'épingle 16 est montée sur le raccord 14 et autour d'une partie de ce dernier. Comme on le voit notamment aux figures 3 à 7, le raccord 14 comprend une rainure annulaire 26 débouchant radialement vers l'extérieur et dans laquelle est logée l'épingle 16.

Des portions incurvées de l'épingle s'étendent le long d'une circonférence centrée sur l'axe X. D'autres portions s'écartent de cette circonférence. C'est notamment le cas de la portion médiane 16c qui a une forme générale en M et comprend deux parties latérales 16c2 orientées vers l'extérieur et une partie médiane 16c1 orientée vers l'intérieur. C'est également le cas des portions latérales qui comprennent chacune au voisinage de leur extrémité libre une partie 16a1, 16b1 orientée vers l'intérieur. Les extrémités libres 16d des portions latérales sont en outre pliées.

La circonférence sur laquelle s'étend l'épingle a un diamètre inférieur au diamètre externe de la rainure 26 de façon à ce qu'une majorité de l'épingle soit complètement logée dans la rainure, comme cela est visible aux figures 5 et 6.

Le fond de la rainure 26 du raccord femelle 14 est percé de lumières traversantes 28 de passage radial des parties internes 16a1, 16b1, 16c1. Le raccord 14 comprend ainsi trois lumières 28 dans l'exemple représenté, dont la lumière de réception de la partie 16a1 est visible aux figures 1 et 7 et la lumière de réception de la partie 16c1 est visible à la figure 5. Une lumière 28 est représentée à plus grand échelle à la figure 9. La rainure 26 et les lumières 28 sont ici situées sur la partie 14b du raccord 14.

Les figures 3 et 4 permettent de voir les parties internes 16a1, 16b1, 16c1 qui traversent les lumières 28 du raccord femelle 14. Ces parties ont un diamètre interne minimal noté D7. Les parties 161a, 16b1, 16c1 confèrent à l'épingle une certaine souplesse élastique par écartement ou rapprochement de ses portions latérales, sensiblement dans un plan contenant l'épingle, qui est un plan perpendiculaire à l'axe X.

Les extrémités 16d coopèrent par appui circonférentiel avec des butées 14e complémentaires du raccord 14 (figure 1) de façon à immobiliser en rotation l'épingle 16 sur le raccord 14, et dans la rainure 26.

Le diamètre D7 est inférieur au diamètre D4 et au diamètre D1. Le diamètre D7 est de préférence supérieur ou égal au diamètre D2. Lorsque le raccord 12 est engagé dans le raccord 14, les parties 16a1, 16b1, 16c1 sont destinées à coopérer par glissement par l'intermédiaire de leurs sommets éventuellement sur la partie 12c, pour assurer un centrage des raccords lorsqu'ils sont présentés l'un dans l'autre. Les parties coopèrent ensuite par glissement avec la rampe 22. Une partie de la force appliquée sur le raccord 14 pour l'emboîter dans le raccord 12 est transmise par la rampe 22 aux parties 16a1, 16b1, 16c1, ce qui provoque une déformation élastique de l'épingle. Cette déformation élastique se traduit par un élargissement du diamètre interne D7 de l'épingle jusqu'à atteindre le diamètre D1 de la partie 12b lorsque les parties glissent jusqu'à cette partie. Il suffit alors de poursuivre la translation du raccord jusqu'à ce que les parties 16a1, 16b1, 16c1 s'engagent par retour et encliquetage élastique dans la rainure 20 du raccord mâle 12. Cette position est représentée à la figure 6 et correspond à la position correcte d'emboîtement des raccords 12, 14. Dans cette position, le plan précité contenant l'épingle 16 passe sensiblement au niveau de la rainure 20.

Bien que cela ne soit pas représenté, le raccord 14 pourrait comprendre des moyens destinés à coopérer avec l'épingle 16 pour la rendre imperdable et en particulier non désolidarisable du raccord.

### -> Pion(s) 18

Dans l'exemple représenté, le dispositif 10 comprend deux pions 18 mais il pourrait en comporter davantage. Les pions 18 sont diamétralement opposés et ont une forme générale de clou dans cet exemple.

Un pion 18 est représenté à plus grande échelle à la figure 10 et comprend une tige 18a sensiblement cylindrique d'axe Y, et une tête 18b située à une extrémité longitudinale de la tige 18a. Dans la variante non représentée ou le pion aurait une forme d'haltère, elle comprendrait une tête à chacune des extrémités longitudinales d'une tige.

Dans l'exemple représenté, la tige 18a est fendue et comprend une fente 18c qui s'étend le long de l'axe Y jusqu'à par exemple la moitié de sa longueur. La fente 18c divise l'extrémité libre de la tige 18a en deux parties qui sont légèrement déformables élastiquement en flexion et qui portent chacune une dent d'accrochage 18d. Les dents 18d sont ici diamétralement opposées et orientées vers l'extérieur vis-à-vis de l'axe Y. La tête 18b a une forme générale plate à contour circulaire, dont le sommet, opposé à la tige 18a, est légèrement bombé ou arrondi.

Chaque pion 18 est logé dans un orifice radial traversant 30 du raccord femelle 14, qui débouche sur la rampe 24. Le raccord 14 comprend ainsi deux orifices 30 diamétralement opposés de réception des pions 18.

Chaque orifice 30 comprend trois parties, respectivement interne 30a, intermédiaire 30b et externe 30c. La partie externe 30c de l'orifice 30 est un logement cylindrique de diamètre D8 qui débouche radialement vers l'extérieur sur la périphérie externe du raccord 14 (figures 5 et 6). La partie intermédiaire 30b est un logement cylindrique de diamètre D9, inférieur à D8, qui s'étend entre les parties 30a, 30c (figures 5 et 6). Les parties 30b, 30c sont coaxiales. La partie 30a débouche sur la rampe 24 et définit une surface périphérique d'appui 32 autour du débouché de la partie 30b (figure 9).

Comme on le voit aux figures 5 et 6, chaque pion 18 est monté dans un orifice 30 de façon à ce que sa tête 18b soit située dans la partie 30c, sa tige 18a traverse la partie 30b et ses dents soient situées dans ou au-delà de la partie 30a et soient aptes à venir en appui sur la surface 32.

Les orifices 30 ont chacun une orientation radiale et les pions 18 sont logés dans ces orifices de façon à ce que leurs axes Y s'étendent radialement. Les pions 18 sont mobiles en translation radiale dans les orifices 30 depuis une position interne représentée aux figures 4 et 5 jusqu'à une position externe représentée aux figures 3 et 6. Dans la position des figures 4 et 5, les têtes 18b sont en appui radial sur le fond radialement interne des parties 30c des orifices 30, et les extrémités libres des tiges 18a sont situées sur une circonférence centrée sur l'axe X, de diamètre D6 (figure 4). Dans la position des figures 3 et 6, les dents 18d des pions sont en appui sur la surface 32 ou rapprochées de cette surface et les extrémités libres des tiges 18a sont situées cette fois-ci sur une circonférence de diamètre D6' supérieur à D6 (figure 3). Dans cette position, les têtes des pions sont situées à l'extrémité radialement externe des parties 30c et ont leurs sommets sensiblement alignés avec une surface périphérique externe du raccord 14.

Le déplacement radial des pions 18 entre ces positions est provoqué par l'insertion des raccords 12, 14 l'un dans l'autre, les pions étant destinés à coopérer par glissement par l'intermédiaire de leurs extrémités libres ou pointes sur le raccord mâle 12, et en particulier sur la rampe 22.

Lorsque le raccord 12 est engagé dans le raccord 14, les pions 18 peuvent coopérer par glissement avec la partie 12c puis avec la rampe 22. Une partie de la force appliquée sur le raccord 14 pour l'emboîter dans le raccord 12 est transmise par la rampe 22 aux pions, ce qui les déplace radialement dans leurs orifices 30 entre les positions précitées. Dans la position représentée à la figure 6, dans laquelle l'épingle 16 est encliquetée dans la rainure 20, les pions 18 sont en appui sur la rampe 22 et sont dans la position externe précitée. La distance axiale entre l'épingle 16 et les pions 18, ou entre la rainure 26 et les orifices 30, est ici inférieure à la longueur cumulée de la rainure 20 et de la rampe 22, de façon à s'assurer que les pions 18 soient bien positionnés sur la rampe 22 lorsque l'épingle 16 est logée dans la rainure 20.

Dans l'exemple représenté, la fente 18c de chaque pion permet de faciliter son montage dans l'orifice 30 par encliquetage élastique. Chaque pion est en effet engagé dans l'orifice correspondant par encliquetage élastique, lors duquel les parties de la tige portant les dents 18d subissent un retour élastique selon l'axe Y dans la partie 30a après insertion du pion dans l'orifice 30 depuis l'extérieur. Les dents 18d coopèrent par butée avec la surface 32 et permettent de rendre les pions imperdables.

Les pions 18 sont par exemple réalisés en polyamide.

### -> Bague 19

La bague 19 est mieux visible à la figure 8. Elle a une forme générale annulaire et est montée autour du raccord femelle 14. Elle est apte à être déplacée sur le raccord 14 entre deux positions axiales, respectivement arrière représentée aux figures 1 et 5, et avant représentée aux figures 2 et 6. Dans les deux positions, elle s'étend autour des orifices 30 et des pions 18 qui sont donc cachés par la bague 19. Dans la position reculée, elle laisse libre l'épingle 16 qui peut se déformer librement élastiquement en direction radiale, sous l'action de la rampe 22. Dans la position avancée, elle recouvre l'épingle 16 qui ne peut pas se déformer élastiquement ou du moins qui est limitée dans ses déformations élastiques.

Comme on le voit aux figures 3 et 4, la bague 19 n'a pas dans l'exemple représenté une forme parfaitement cylindrique car elle est conformée pour épouser avec jeu la forme de l'épingle lorsqu'elle s'étend autour de cette dernière. La bague comprend ainsi des bossages 19a destinés à s'étendre d'une part autour des parties latérales 16c2 et d'autre part autour des extrémités 16d. La bague 19 est conçue pour être bloquée en rotation vis-à-vis du raccord 14.

La bague 19 comprend en outre des pattes 34 élastiquement déformables en direction radiale, qui sont configurées pour coopérer avec le raccord 14 pour immobiliser la bague sur ce dernier en direction axiale.

La bague comprend deux pattes 34 diamétralement opposées dans l'exemple représenté. Chaque patte 34 est formée dans l'épaisseur de la bague. Chaque patte 34 a une forme générale allongée en direction axiale et comprend une extrémité longitudinale, ici arrière, reliée au reste de la bague et une extrémité opposée, et donc avant, qui est libre et qui est formée d'une seule pièce avec un patin 36 en saillie radialement vers l'intérieur. La distance radiale entre les patins 36 est inférieure au diamètre interne de la bague 19. Le diamètre interne de la bague est légèrement supérieur au diamètre externe du raccord 14, de façon à pouvoir coulisser axialement sur ce dernier.

Chaque patin 36 a une forme générale cylindrique dont le diamètre est inférieur au diamètre D8. Les patins sont aptes à être logés dans les parties 30c des orifices 30, lorsque les pions sont dans leur position radiale interne (figure 5), et à être sortis de ces orifices par appui des têtes 18b des pions sur ces patins (figure 6). Les pattes sont ainsi élastiquement déformables par flexion dans un plan radial, entre des positions libres sans contraintes représentées à la figure 5, dans lesquelles les patins 36 sont situés dans les parties 30 des orifices 30, et des positions contraintes et déformées radialement vers l'extérieur dans lesquelles les patins 36 sont sortis des orifices 30.

Dans la position de la figure 5, les patins 36 coopèrent par butée axiale avec les bords périphériques des orifices 30 et la bague 19 est empêchée de se déplacer axialement sur le raccord 14. Dans la position de la figure 6, la bague a été déplacée sur le raccord 14 au-dessus de l'épingle 16 en vue de son verrouillage, c'est-à-dire de façon à empêcher son expansion radiale et sa sortie de la rainure 20. L'épingle 16 peut ainsi être totalement cachée par la bague 19. On comprend dès lors qu'un opérateur ne pourra déplacer la bague en translation, afin de verrouiller l'épingle, que si les raccords sont bien emboîtés l'un dans l'autre jusqu'à encliquetage élastique de l'épingle dans la rainure 20 du raccord 12.

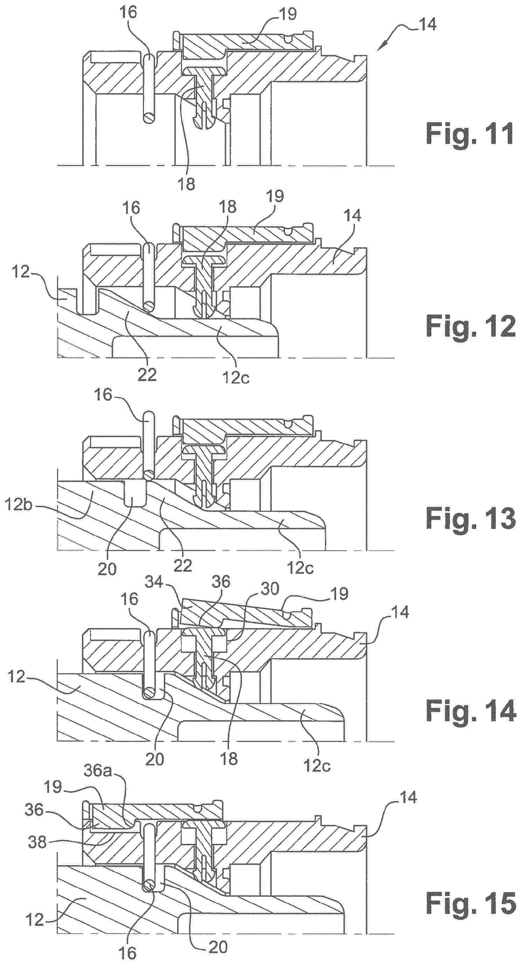

Les figures 11 à 15 montrent des étapes évoquées dans ce qui précède de montage des raccords par emboîtement. Le raccord femelle est représenté à la figure 11, avec les pions 18 et l'épingle 16 en positions sans contrainte, et la bague 19 en position arrière. Le raccord mâle 12 est engagé dans le raccord femelle 14 à la figure 12. L'épingle 16 commence à coopérer avec la rampe 22 alors que les pions 18 glissent sur la partie 12c du raccord 12. La translation du raccord 12 dans le raccord 14 est poursuivie, l'épingle 16 se retrouve sur la partie 12b alors que les pions 18 commencent à coopérer avec la rampe 22. La translation du raccord 12 dans le raccord 14 est poursuivie, l'épingle 16 s'engage par retour élastique dans la rainure 20 du raccord et les pions 18 sont déplacés radialement vers l'extérieur dans leurs orifices 30, ce qui entraîne une déformation élastique des pattes 34 dont les patins 36 sortent des orifices 30. Les raccords 12, 14 sont alors correctement emboîtés l'un dans l'autre et il suffit à un opérateur de procéder au verrouillage de cet emboîtement en déplaçant la bague 19 jusqu'à la position avancée de la figure 15, dans laquelle elle s'étend au-dessus de l'épingle 16. Dans cette position, les pattes 34 peuvent retourner dans leur position sans contraintes en prévoyant sur la bague, juste après la rainure 20 de logement de l'épingle 16 dans la direction d'avance de la bague, des logements 38 de réception des patins. Un de ces logements 38 est visible à la figure 1.

Dans le cas où un opérateur devrait déverrouiller et démonter le dispositif 10, il devrait répéter les étapes précitées en sens inverse, la première étape de démontage consistant à exercer une force axiale de traction sur la bague pour la déplacer de sa position avancée de la figure 15 à la position reculée de la figure 14. Cette force doit être suffisante pour déformer à nouveau les pattes et extraire les patins 36 des logements 38. Pour faciliter cette étape, les extrémités arrière 36a des patins 36 qui peuvent être destinées à coopérer directement avec l'épingle 16, peuvent être chanfreinées, comme cela est visible à la figure 8. En pratique, le dispositif 10 n'est toutefois pas destiné à être souvent démonté.

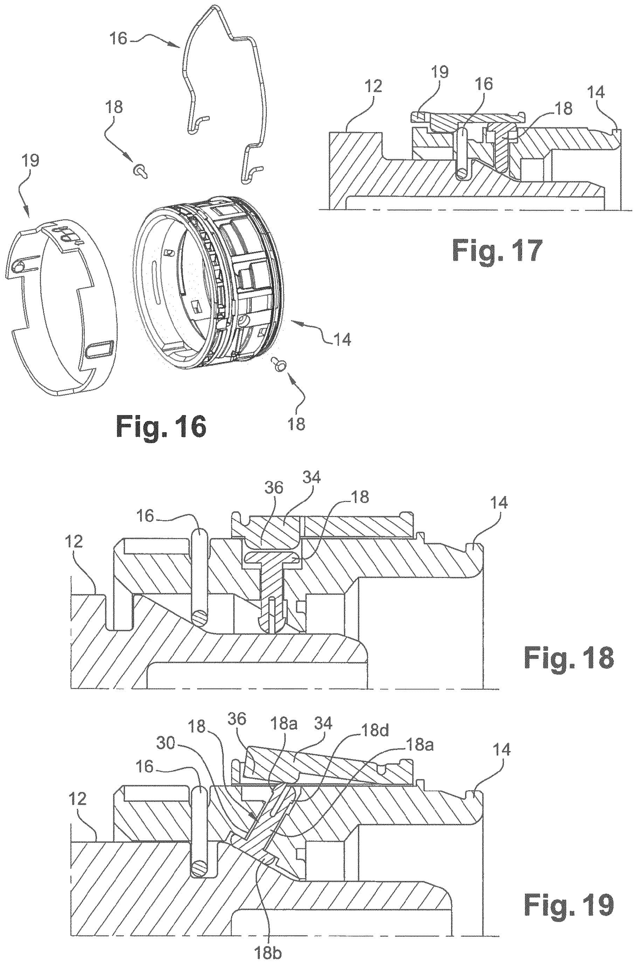

La variante de réalisation des figures 16 à 19 permet de voir que des caractéristiques du dispositif 10 sont facultatives. C'est notamment le cas des pions 18, qui ne sont pas forcément fendus et qui ne comprennent pas forcément de dents. C'est également le cas de l'épingle 16 qui peut avoir une conformation différente. La variante de réalisation de la figure 18 montre que les pattes 34 peuvent avoir une orientation et/ou une longueur différentes. Elles peuvent par exemple être orientées en direction transversales ou circonférentielles par rapport à l'axe X du dispositif. La variante de réalisation de la figure 19 montre que les pions 18 peuvent être inclinés par rapport à un plan perpendiculaire à l'axe X. Dans l'exemple représenté, l'axe d'allongement de chaque pion, et donc de déplacement du pion, est sensiblement perpendiculaire au point ou à la surface d'appui de ce pion sur la rampe 22. Les orifices 30 de réception des pions ont naturellement une orientation similaire. Par ailleurs, le pion peut être disposé de manière tête bêche et avoir sa tête 18b du côté du raccord 12 et donc sa pointe et ses dents 18c du côté opposé et donc du côté de la bague et des pattes 34. C'est alors les pointes des pions qui sont destinées à coopérer avec les pattes et à solliciter leur déformation.

Comme évoqué dans ce qui précède, le dispositif selon l'invention permet de garantir la bonne connexion des raccords 12, 14. Dans le cas d'un mauvais montage des raccords, il ne serait pas possible de déplacer axialement la bague 19 sur le raccord femelle 14.

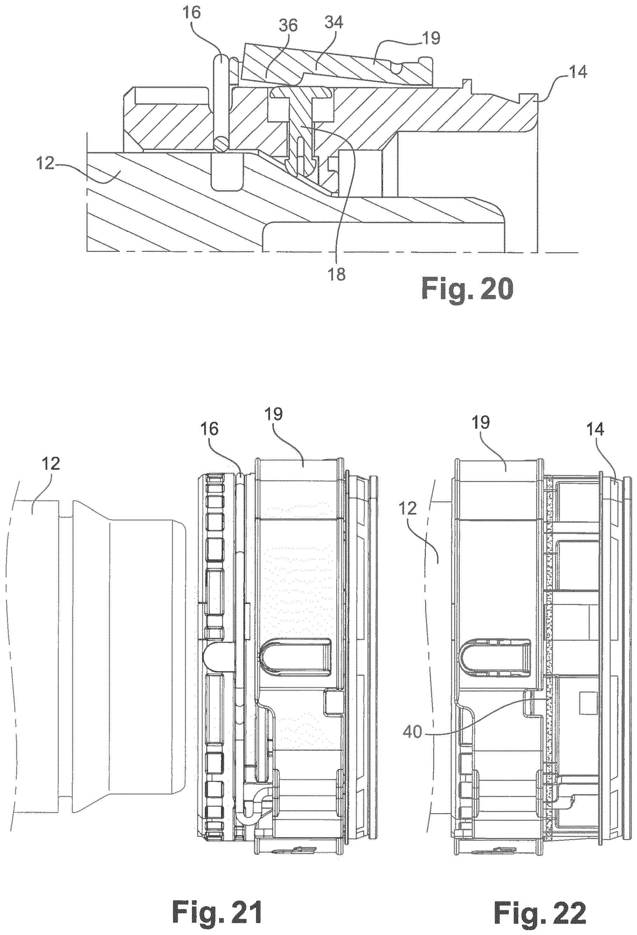

Il existe plusieurs cas de mauvais montage. Dans un premier cas, le raccord mâle n'est pas engagé dans le raccord femelle. Les pions 18 sont donc dans leurs positions radialement internes et la bague 19 est empêchée de se déplacer axialement sur le raccord femelle du fait de la coopération de ses patins 36 avec le raccord femelle. Les autres cas concernent les mauvais positionnements axiaux du raccord mâle dans le raccord femelle. Parmi ces mauvais positionnements, il y a celui dans lequel les pions prennent appui sur les patins 36 et déforment élastiquement les pattes 34 de la bague qui est libérée axialement sur le raccord femelle, et dans lequel l'épingle 16 n'est pas encore encliquetée dans la rainure 20. Ce cas de figure est illustré à la figure 20. La course axiale de déplacement de la bague 19 est alors limitée par l'épingle 16. La bague ne peut alors pas atteindre sa position de verrouillage de l'épingle car elle ne peut pas être amenée jusqu'à la position axiale où elle recouvre l'épingle.

L'étape illustrée à la figure 20 peut être intercalée entre les étapes des figures 12 et 13.

Les figures 21 et 22 représentent une autre variante de réalisation du dispositif qui comprend ici un repère visuel 40 sur le raccord femelle 14. Le repère visuel 40 est par exemple une marque en couleur, une gravure, un symbole, un texte, etc. Il est de préférence situé sur la périphérie externe du raccord 14, sur le parcours de déplacement de la bague 19. La bague est configurée pour être apte à recouvrir et cacher le repère visuel 40, en particulier lorsqu'elle est dans ladite position de libération de l'épingle 16. Lorsque la bague 19 est dans la position de verrouillage de l'épingle 19, le repère visuel 40 est visible par un opérateur qui lui garantit que la connexion entre les raccords 12, 14 est correcte. Dans l'exemple représenté, le repère visuel 40 se présente sous la forme d'un trait épais annulaire s'étendant sur tout le pourtour du raccord femelle 14.

## Revendications

1. Dispositif (10) de raccordement fluidique, comportant :
- un raccord mâle (12) et un raccord femelle (14), qui sont configurés pour être emboîtés l'un dans l'autre le long d'un axe X,
- une épingle (16) élastiquement déformable de forme générale en U ou C et montée sur le raccord femelle, ladite épingle comportant au moins une partie (16a1, 16b1, 16c1) traversant le raccord femelle et configurée pour coopérer par encliquetage élastique avec ledit raccord mâle, et
- une bague (19) mobile en translation axiale sur le raccord femelle entre une position de libération de l'épingle et une position de verrouillage de cette épingle ainsi que des raccords,
**caractérisé en ce que** le raccord femelle porte des éléments (18) mobiles en translation radiale entre une première position radiale, de préférence interne, d'immobilisation de la bague sur le raccord femelle, et une seconde position radiale, de préférence externe, de libération de la bague, lesdits éléments étant configurés pour coopérer à la fois avec le raccord mâle et ladite bague de sorte à libérer la bague lorsque l'épingle est encliquetée sur le raccord mâle.

2. Dispositif (10) selon la revendication 1, dans lequel les éléments sont des pions (18) qui ont par exemple une forme générale de clou ou d'haltère.

3. Dispositif (10) selon la revendication 2, dans lequel les pions (18) ont des axes d'allongement s'étendant radialement par rapport à l'axe X.

4. Dispositif (10) selon la revendication 2 ou 3, dans lequel les pions (18) ont chacun une tête (18b) configurée pour coopérer avec la bague (19) et une pointe configurée pour coopérer avec le raccord mâle (12), ou inversement.

5. Dispositif (10) selon l'une des revendications précédentes, dans lequel l'épingle (16) est configurée de façon à limiter la course de déplacement de la bague (19) sur le raccord femelle (14), lorsque l'épingle n'est pas dans une position d'encliquetage et lorsque lesdits éléments sont dans ladite seconde position.

6. Dispositif (10) selon l'une des revendications précédentes, dans lequel le raccord mâle (12) comprend une portion cylindrique (12c) reliée à une extrémité de petit diamètre d'une rampe tronconique (22) dont une extrémité de plus grand diamètre est reliée à une gorge annulaire (20), ladite épingle (16) étant configurée pour coopérer par glissement avec ladite rampe et par encliquetage élastique avec ladite gorge, et lesdits éléments (18) étant destinés à coopérer par glissement avec ladite rampe.

7. Dispositif (10) selon l'une des revendications précédentes, dans lequel la bague (19) comprend des pattes de verrouillage (34) élastiquement déformables, entre une position libre sans contrainte dans laquelle elles bloquent axialement la bague sur le raccord femelle, et une position contrainte par lesdits éléments (18) dans laquelle elles autorisent un déplacement de la bague sur le raccord femelle.

8. Dispositif (10) selon la revendication 7, dans lequel les pattes (34) ont une forme allongée en direction axiale.

9. Dispositif (10) selon la revendication 7 ou 8, en dépendance de la revendication 4 au moins, dans laquelle les pattes de verrouillage (34) comprennent à des extrémités libres des patins (36) qui sont logés avec les têtes (18b) des pions (18) dans des logements de forme complémentaire du raccord femelle (14), et qui sont déplaçables radialement dans ces logements.

10. Dispositif (10) selon l'une des revendications précédentes, dans lequel l'épingle (16) et les éléments (18) sont à une distance axiale qui est inférieure à la longueur de la bague (19), qui est elle-même inférieure à la longueur du raccord femelle (14).

11. Dispositif (10) selon l'une des revendications précédentes, dans lequel la bague (19) est configurée pour être apte à recouvrir et cacher l'épingle (16) et lesdits éléments (18), en particulier lorsqu'elle est dans ladite position de verrouillage.

12. Dispositif (10) selon l'une des revendications précédentes, dans lequel le raccord femelle (14) comprend un repère visuel (40) et la bague (19) est configurée pour être apte à recouvrir et cacher ce repère visuel, en particulier lorsqu'elle est dans ladite position de libération.

13. Dispositif (10) selon l'une des revendications précédentes, dans lequel l'épingle (16) est formée par un élément élastique tel qu'un fil métallique ou plastique.

## Patentansprüche

1. Fluidverbindungsvorrichtung (10), umfassend:
- einen Stecker (12) und eine Buchse (14), die konfiguriert sind, um entlang einer Achse X ineinandergesteckt zu werden,
- einen elastisch verformbaren Stift (16) mit einer allgemeinen U- oder C-Form, der auf der Buchse angebracht ist, wobei der Stift mindestens einen Teil (16a1, 16b1, 16c1) umfasst, der sich mit der Buchse schneidet und konfiguriert ist, um durch elastisches Einrasten mit dem Stecker zusammenzuwirken, und
- einen beweglichen Ring (19), der axial auf der Buchse von einer Stiftentriegelungsposition in eine Verriegelungsposition des Stiftes und der Verbinder verschoben wird,
**dadurch gekennzeichnet, dass** die Buchse bewegliche Elemente (18) trägt, die radial von einer ersten radialen, vorzugsweise internen Position, wodurch der Ring auf der Buchse immobilisiert wird, zu einer zweiten radialen, vorzugsweise externen Position verschoben werden, wodurch der Ring entriegelt wird, wobei die Elemente so konfiguriert sind, dass sie mit beiden, dem Stecker und dem Ring zusammenwirken, um den Ring freizugeben, wenn der Stift auf dem Stecker eingerastet wird.

2. Vorrichtung (10) nach Anspruch 1, wobei die Elemente Passstifte (18) sind, die beispielsweise eine allgemein nagel- oder hantelförmige Form darbieten.

3. Vorrichtung (10) nach Anspruch 2, wobei die Passstifte (18) Längungsachsen aufweisen, die sich radial in Bezug auf die Achse X erstrecken.

4. Vorrichtung (10) nach Anspruch 2 oder 3, wobei die Passstifte (18) jeweils einen Kopf (18b) aufweisen, der konfiguriert ist, um mit dem Ring (19) zusammenzuwirken, und eine Spitze, die konfiguriert ist, um mit dem Stecker(12) zusammenzuwirken oder umgekehrt.

5. Vorrichtung (10) nach einem der vorstehenden Ansprüche, wobei der Stift (16) konfiguriert ist, um die Bewegung des Rings (19) auf der Buchse (14) zu begrenzen, wenn sich der Stift nicht in einer eingerasteten Position befindet und wenn sich die Elemente in der zweiten Position befinden.

6. Vorrichtung (10) nach einem der vorstehenden Ansprüche, wobei der Stecker (12) einen zylindrischen Abschnitt (12c) umfasst, der mit einem Ende mit kleinem Durchmesser einer kegelstumpfförmigen Rampe (22) verbunden ist, die ein Ende mit einem größeren Durchmesser aufweist, das mit einer ringförmigen Nut (20) verbunden ist, wobei der Stift (16) konfiguriert ist, um durch Gleiten mit der Rampe und durch elastisches Einrasten mit der Nut zusammenzuwirken, und wobei die Elemente (18) konfiguriert sind, um durch Gleiten mit der Rampe zusammenzuwirken.

7. Vorrichtung (10) nach einem der vorstehenden Ansprüche, wobei der Ring (19) Verriegelungslaschen (34) umfasst, die von einer freien uneingeschränkten Position, wodurch sie den Ring auf der Buchse axial blockieren, zu einer eingeschränkten Position durch die Elemente (18) elastisch verformbar sind, wodurch sie die Verschiebung des Rings auf der Buchse ermöglichen.

8. Vorrichtung (10) nach Anspruch 7, wobei die Laschen (34) eine längliche Form in einer axialen Richtung aufweisen.

9. Vorrichtung (10) nach Anspruch 7 oder 8, wenn abhängig von mindestens Anspruch 4, wobei die Verriegelungslaschen (34) an ihren freien Enden Gleitstücke (36) umfassen, die mit den Köpfen (18b) der Passstifte (18) in Gehäusen untergebracht sind, die eine Form darbieten, die zu der Buchse (14) passt, und die in diesen Gehäusen radial beweglich sind.

10. Vorrichtung (10) nach einem der vorstehenden Ansprüche, wobei der Stift (16) und die Elemente (18) in einem axialen Abstand sind, der kleiner ist als die Länge des Rings (19), wobei Letzterer kleiner ist als die Länge der Buchse (14).

11. Vorrichtung (10) nach einem der vorstehenden Ansprüche, wobei der Ring (19) konfiguriert ist, um den Stift (16) und die Elemente (18) abdecken und verbergen zu können, insbesondere, wenn sie sich in der Verriegelungsposition befinden.

12. Vorrichtung (10) nach einem der vorstehenden Ansprüche, wobei die Buchse (14) eine optische Markierung (40) umfasst und der Ring (19) konfiguriert ist, um diese optische Markierung abdecken und verbergen zu können, insbesondere, wenn sie sich in der Entriegelungsposition befindet.

13. Vorrichtung (10) nach einem der vorstehenden Ansprüche, wobei der Stift (16) durch ein elastisches Element, wie beispielsweise einen Metall- oder Kunststoffdraht, gebildet ist.

## Claims

1. Fluid connection device (10), comprising:
- a male connector (12) and a female connector (14), configured to be inserted into one another along an axis X,
- an elastically-deformable pin (16) with a generally U or C shape mounted on the female connector, said pin comprising at least one part (16a1, 16b1, 16c1) intersecting with the female connector and configured to cooperate by elastic snap-fitting with said male connector, and
- a movable ring (19) that is displaced axially on the female connector, from a pin release position to a locking position of the pin and of the connectors,
**characterised in that** the female connector supports mobile elements (18) displaced radially from a first radial position, preferably internal, whereby the ring is immobilised on the female connector, to a second radial position, preferably external, whereby the ring is released, said elements being configured to cooperate both with the male connector and said ring so as to release the ring when the pin is snap-fitted onto the male connector.

2. Device (10) according to claim 1, wherein the elements are locating pins (18) that feature, for example, a generally of nail or dumbbell shape.

3. Device (10) according to claim 2, wherein the locating pins (18) have axes of elongation that extend radially with respect to the axis X.

4. Device (10) according to claim 2 or 3, wherein the locating pins (18) each have a head (18b) configured to cooperate with the ring (19) and a tip configured to cooperate with the male connector (12), or conversely.

5. Device (10) according to one of the preceding claims, wherein the pin (16) is configured to limit the motion of the ring (19) on the female connector (14), when the pin is not in a snap-fitted position, and when said elements are in said second position.

6. Device (10) according to one of the preceding claims, wherein the male connector (12) comprises a cylindrical portion (12c) connected to a small diameter end of a frustoconical ramp (22), having a greater diameter end connected to an annular groove (20), said pin (16) being configured to cooperate by sliding with said ramp and by elastic snap-fitting with said groove, and said elements (18) being configured to cooperate by sliding with said ramp.

7. Device (10) according to one of the preceding claims, wherein the ring (19) comprises locking tabs (34) that are elastically deformable, from a free unconstrained position whereby they axially block the ring on the female connector, to a position of constraint by said elements (18), whereby they permit the displacement of the ring on the female connector.

8. Device (10) according to claim 7, wherein the tabs (34) have an elongated shape in an axial direction.

9. Device (10) according to claim 7 or 8, when dependent on at least claim 4, wherein the locking tabs (34) comprise, at their free ends, skids (36) that are housed with the heads (18b) of the locating pins (18) in housings that feature a shape that fits with the female connector (14), and that are radially movable in these housings.

10. Device (10) according to one of the preceding claims, wherein the pin (16) and the elements (18) are at an axial distance that is less than the length of the ring (19), the latter being less than the length of the female connector (14).

11. Device (10) according to one of the preceding claims, wherein the ring (19) is configured to be able to cover and conceal the pin (16) and said elements (18), in particular when they are in said locking position.

12. Device (10) according to one of the preceding claims, wherein the female connector (14) comprises a visual mark (40) and the ring (19) is configured to be able to cover and conceal this visual mark, in particular when it is in said release position.

13. Device (10) according to one of the preceding claims, wherein the pin (16) is formed by an elastic element, such as a metal or plastic wire.
